# EUROPÄISCHE PATENTSCHRIFT

(11) **EP 3 339 664 B1**
(45) Veröffentlichungstag und Bekanntmachung des Hinweises auf die Patenterteilung: **15.09.2021**
(21) Anmeldenummer: 16205905.9
(22) Anmeldetag: 21.12.2016
(51) Int. Cl.: F16B 37/08, F16B 39/10, F16B 21/04

(54) **BEFESTIGUNGSELEMENT, ANORDNUNG MIT EINEM BEFESTIGUNGSELEMENT UND EINBAUVERFAHREN EINES BEFESTIGUNGSELEMENTS**
FASTENING ELEMENT, ARRANGEMENT WITH A FASTENING ELEMENT AND METHOD OF INSTALLING A FASTENING ELEMENT
ÉLÉMENT DE FIXATION, SYSTÈME COMPRENANT UN ÉLÉMENT DE FIXATION ET PROCÉDÉ DE POSE D'UN ÉLÉMENT DE FIXATION

(43) Veröffentlichungstag der Anmeldung: 27.06.2018
(73) Patentinhaber: Newfrey LLC, New Britain, CT 06053 (US)
(72) Erfinder: Albach, Jens, 35394 Giessen (DE); Rosemann, Frank, 35394 Giessen (DE); Konstanz, Anton, 35394 Giessen (DE)
(74) Vertreter: SBD IPAdmin

(56) Entgegenhaltungen:
- EP-A1- 1 538 350
- EP-A1- 2 886 885
- WO-A1-2010/142499
- GB-A- 558 302
- US-A1- 2005 135 896

## Beschreibung

### Gebiet der Erfindung

Die vorliegende Erfindung betrifft ein Befestigungselement, das mit einem Bolzen zusammenwirken kann.

Ferner betrifft die vorliegende Erfindung eine Anordnung mit einem Befestigungselement und ein Einbauverfahren eines Befestigungselements dieser Art.

### Hintergrund der Erfindung

Befestigungselemente werden beispielsweise in der Automobilindustrie häufig und für verschiedene Anwendungen benutzt. Für alle Anwendungen sind verschiedene Voraussetzungen erforderlich. Zum Beispiel werden für Unterböden oder Radlaufschalen Befestigungselemente gefordert, die im Zusammenbau mit mehreren Komponenten eine Höhe der Befestigungselemente von 1mm bis 9mm aufweisen. Schraublösungen wie z.B. mit Muttern könnten diese Voraussetzung erfüllen. Leider sind solche Schraublösungen aus Zykluszeitgründen sehr ungünstig.

Das Dokument JP2013-061036A offenbart ein Befestigungselement, das mit einem Bolzen zusammenwirken kann. Das Befestigungselement umfasst einen inneren Teil und einen äußeren Teil. Der innere Teil weist einen Sperrfinger auf, der sich in das Gewinde eines Bolzens klemmt. Das äußere Teil wird über das innere Teil der Bolzenaufnahme gesteckt. Das Dokument GB558302A offenbart ein Befestigungselement zum möglichen Zusammenwirken mit einem Bolzen. Das Befestigungselement umfasst ein äußeres Gehäuse, ein hohles kolbenartiges Zwischenelement und ein radial (aus-)dehnbares zweiteiliges oder geteiltes mutterartiges Element. Das geteilte mutterartige Element wird in dem äußeren Gehäuse gehalten und mittels axialer Bewegung des hohlen kolbenartigen Zwischenelements zum Anliegen am Bolzen gebracht. Solche Befestigungselemente sind komplex herzustellen. Des Weiteren sind solche Befestigungselemente manchmal schwierig zu implementieren in Anordnungen mit variablen Parametern wie Länge, Werkstückdicke, Anzahl von Werkstücken, usw.

Der vorliegenden Erfindung liegt daher die Aufgabe zugrunde, ein verbessertes Befestigungselement anzugeben, das vorzugsweise eine bessere Montageflexibilität mit geringen Montagekräften und hohen Abzugskräften ermöglicht.

### Zusammenfassung der Erfindung

Die oben genannte Aufgabe wird gelöst, durch ein Befestigungselement gemäß dem Anspruch 1, durch eine Anordnung gemäß dem Anspruch 9 oder 10 sowie durch ein Einbauverfahren des Befestigungselements gemäß dem Anspruch 11.

Das erfindungsgemäße Befestigungselement weist die folgenden Merkmalen auf: ein Rastteil, das eine Hülse und einen von der Hülse vorragenden Rastkörper aufweist, wobei die Hülse sich entlang einer Längsachse erstreckt, wobei der Rastkörper in Richtung der Längsachse vorragt, und wobei die Hülse und der Rastkörper eine Aufnahme ausbilden, in die ein Schaft eines bolzenartigen Elements aufnehmbar ist, und ein Kopfteil, das über dem Rastteil angeordnet ist, wobei das Kopfteil einen Grundkörper und einen Abstützabschnitt aufweist, wobei Kopfteil und Rastteil zwischen einer Freiposition und einer Absperrposition durch einen Bajonettverschluss relativ zueinander beweglich sind, und wobei der Abstützabschnitt in der Absperrposition den Rastkörper überdeckt und den Rastkörper gegen eine translatorische Bewegung entlang der Längsachse blockiert.

Das erfindungsgemäße Befestigungselement ermöglicht eine sichere Befestigung ohne Schraublösung und mit geringen Montagekräfte und hohen Abzugskräfte. Beispielsweise kann das erfindungsgemäße Befestigungselement ohne Werkzeug montiert werden, ohne die Spannqualität zu verringern.

Gemäß einer weiteren bevorzugten Ausführungsform weist das Kopfteil einen Vorsprung und die Hülse des Rastteils einen Spalt auf. Der Vorsprung und der Spalt bilden den Bajonettverschluss aus. Die Formschlussverbindung des Bajonettverschluss ist einfach hergestellt.

In einer bevorzugten Ausführungsform weist der Grundkörper eine Nut auf, die teilweise die Hülse aufnimmt. Dieses Merkmal erlaubt eine bessere Verbindung zwischen Rastteil und Kopfteil.

In einer weiteren bevorzugten Ausführungsform weist das Kopfteil einen Griffabschnitt auf, der bezüglich des Grundkörpers eine Querschnitterweiterung bereitstellt. Der Griffabschnitt gewährleistet eine Montage ohne Werkzeuge.

In einer besonders bevorzugten Ausführungsform ist der Abstützabschnitt kreisförmig. Der Abstützabschnitt kann einen Kranz mit Unterbrechungen ausbilden. Dies gewährleistet eine bessere Verteilung des Drucks.

In einer besonders bevorzugten Ausführungsform erstreckt sich die Hülse entlang der Längsachse zwischen einer ersten Endportion und einer zweiten Endportion und der Rastkörper ist mit der ersten Endportion verbunden. Dies gewährleistet eine platzsparende Bauform.

In einer besonders bevorzugten Ausführungsform erstreckt sich die Hülse entlang der Längsachse zwischen einer ersten Endportion und einer zweiten Endportion, wobei das Rastteil einen Flansch aufweist, und wobei der Flansch mit der ersten Endportion verbunden ist und sich von der Hülse nach außen erstreckt. Dies gewährleistet eine platzsparende Bauform.

In einer besonders bevorzugten Ausführungsform ist ein Gummiring und/oder eine Riffelung auf dem Flansch vorgesehen. Dies verhindert ein einfaches Lösen (auch durch Vibrationen) des Rastteils.

Ferner wird die obige Aufgabe gelöst durch eine Anordnung mit einem Befestigungselement und einem bolzenartigen Element mit einem Gewindeschaft oder einem Schaft mit einem Hinterschnitt, wobei der Gewindeschaft oder dem Hinterschnitt in der Aufnahme aufgenommen ist, und wobei der Rastkörper mit den Gewindegänge des Gewindeschaftes oder dem Hinterschnitt rastet. Die Verbindung zwischen dem Gewindeschaft und dem Rastkörper verbessert die Befestigung.

Schließlich wird die obige Aufgabe gelöst durch ein Einbauverfahren eines Befestigungselements, das die Schritte umfasst:
- Bereitstellen eines Befestigungselements, wobei Kopfteil und Rastteil in der Freiposition sind,
- Bereitstellen eines erstes Werkstücks mit einem Loch,
- Bereitstellen eines zweites Werkstücks mit einem verbundenen bolzenartigen Element mit einem Gewindeschaft oder einem Hinterschnitt,
- Eindringen des bolzenartigen Elements in das Loch,
- Anordnen des Befestigungselements auf dem bolzenartigen Element,
- Aufdrücken des Befestigungselements, so dass der Rastkörper mit den Gewindegängen des Schaftes oder mit dem Hinterschnitt einrastet,
- Weiterdrücken des Befestigungselements auf den Schaft, so dass das Kopfteil sich bewegt, um Kopfteil und Rastteil mithilfe des Bajonettverschlusses in die Absperrposition einzustellen.

Eine Einsetzung dieses Verfahren ist einfach.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine perspektivische Ansicht einer bevorzugten Ausführungsform einer erfindungsgemäßen Anordnung mit einem Befestigungselement, einem ersten Werkstück und einem bolzenartigen Element;
Fig. 2 eine perspektivische Ansicht des Befestigungselements aus Fig. 1 mit einem Rastteil und einem Kopfteil ;
Fig. 3 eine Schnittansicht des Befestigungselements aus Fig. 2;
Fig. 4 eine perspektivische Ansicht des Rastteils aus Fig. 2;
Fig. 5 eine perspektivische Ansicht des Kopfteils aus Fig. 2;
Fig. 6 eine Schnittansicht des Kopfteils aus Fig. 5;
Fig. 7 eine Schnittansicht der Anordnung aus Fig. 1;
Fig. 8 eine Schnittansicht einer weiteren bevorzugten Ausführungsform der Anordnung.

### Detaillierte Beschreibung bevorzugter Ausführungsformen vorliegender Erfindung

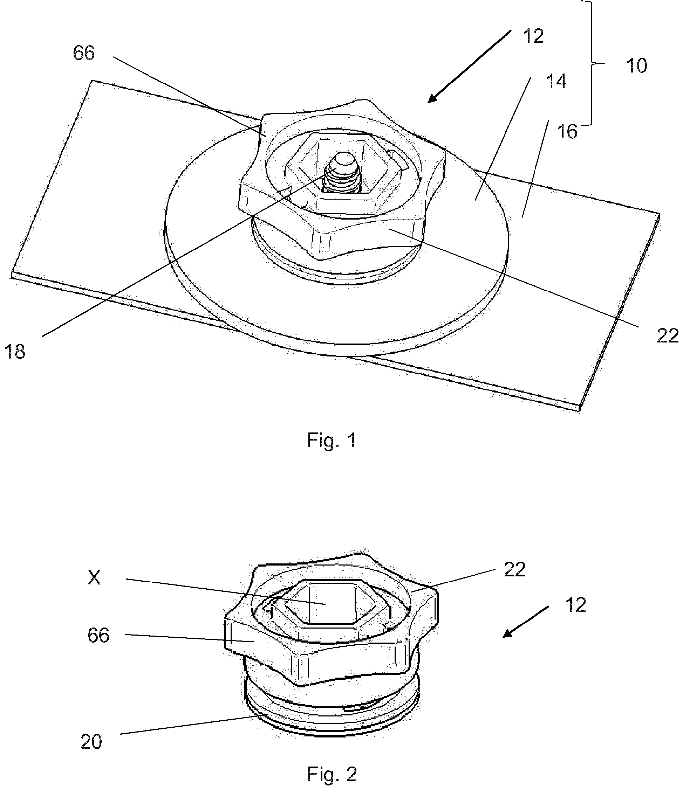

Fig. 1 zeigt eine Anordnung 10 mit einem Befestigungselement 12, einem ersten Werkstück 14, einem zweiten Werkstück 16 und einem bolzenartigen Element 18.

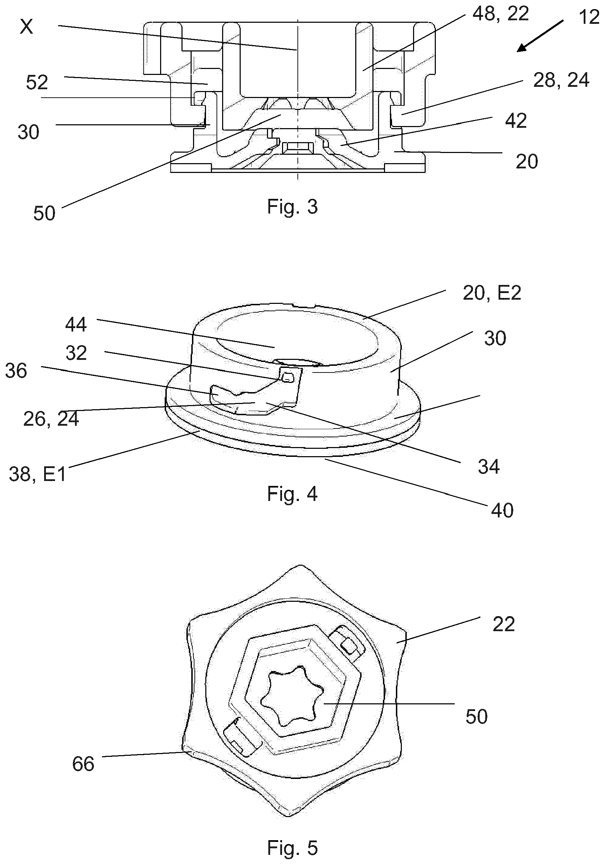

Das Befestigungselement 12, wie in Fig. 2 und 3 dargestellt, ist vorzugsweise zweiteilig und umfasst ein Rastteil 20 und ein Kopfteil 22. Das Rastteil 20 und das Kopfteil 22 können miteinander verbunden sein und sind relativ zueinander beweglich zwischen einer Freiposition und einer Absperrposition. Die Bewegung zwischen der Freiposition und der Absperrposition wird durch einen Bajonettverschluss 24 ermöglicht. In der Absperrposition ist das Kopfteil 22 relativ zu dem Rastteil 20 gegen Drehung und Verschiebung gesichert. In der Freiposition kann das Kopfteil 22 relativ zu dem Rastteil 20 verschoben werden bzw. sich drehen. Fig. 3 zeigt Rastteil 20 und Kopfteil 22 in der Freiposition. Der Bajonettverschluss 24 ist durch einen Spalt 26 und einen Vorsprung 28 ausgebildet.

Beispielsweise kann das Kopfteil 22 den Vorsprung 28 aufweisen und das Rastteil 20 den Spalt 26. In einer anderen Ausführungsform kann der Vorsprung auf dem Rastteil ausgebildet sein und der Spalt auf dem Kopfteil. Der Spalt 26 bildet eine Steuerkurve für den Vorsprung. Der Spalt hat beispielsweise eine konstante oder im Wesentlichen konstante Breite.

Fig. 4 zeigt das Rastteil 20 mit dem Spalt 26. Das Rastteil 20 weist eine Hülse 30 auf. Die Hülse 30 ist beispielsweise wie dargestellt eine zylindrische Hülse, die sich zwischen einer ersten und einer zweiten Endportion E1, E2 entlang einer Längsachse X erstreckt. Die Hülse 30 umfasst eine innere und eine von der inneren Mantelfläche abgewandte äußere Mantelfläche. Die innere Mantelfläche zeigt in Richtung der Längsachse X. Der Spalt 26 ist auf der äußeren Mantelfläche angeordnet, aber in einer anderen Ausführungsform könnte der Spalt auf der inneren Mantelfläche angeordnet sein.

Wie in Fig. 4 dargestellt kann der Spalt 26 einen ersten, einen zweiten und einen dritten Abschnitt 32, 34, 36 umfassen. Der zweite Abschnitt 34 ist zwischen dem ersten und dem dritten Abschnitt 32, 36 angeordnet. Der erste 32 Abschnitt ist beispielsweise gerade und erstreckt sich von der zweiten Endportion parallel zur Längsachse X.

Der zweite Abschnitt 34 erstreckt sich beispielsweise schräg relativ zu dem ersten Abschnitt. Der dritte Abschnitt 36 kann sich orthogonal zu dem ersten Abschnitt erstrecken. Der dritte Abschnitt 36 ist beispielsweise durch eine Erhebung von dem zweiten Abschnitt 34 getrennt.

Das Rastteil 20 weist einen Flansch 38 auf. Der Flansch 38 ist mit der ersten Endportion E1 verbunden und erstreckt sich von der Hülse 30 nach außen. Der Flansch 38 bildet einen Sockel aus. Der Flansch 38 hat eine erste Oberfläche, die in Richtung der Hülse 30 zeigt und eine abgewandte zweite Oberfläche. Ein Gummiring 40 kann auf der zweiten Oberfläche angeordnet sein. Eine Riffelung (nicht dargestellt) kann ebenfalls dort angeordnet sein.

Des Weiteren weist das Rastteil 20 einen Rastkörper 42 auf. Der Rastkörper 42 besteht beispielsweise aus ein, zwei oder mehreren Rastfingern. Der Rastkörper 42 kann auch kontinuierlich sein und eine Rastkrone ausbilden. Der Rastkörper 42 ragt von der Hülse 30 in Richtung der Längsachse X vor. Der Rastkörper 42 ist mit der inneren Mantelfläche der Hülse 30 verbunden. Der Rastkörper kann sich von der zweiten Endportion der Hülse erstrecken. Wie in Fig. 3, 7 und 8 dargestellt, kann der Rastkörper 42sich auch von der ersten Endportion E1 erstrecken. Der Rastkörper 42 bildet einen flexiblen Abschnitt, der sich schräg von der ersten Endportion E1 in Richtung der Längsachse X erstreckt. Der Rastkörper 42 kann ebenfalls eine oder mehrere elastische Laschen sein.

Der Rastkörper 42 und die Hülse 30 bilden eine Aufnahme 44, die einen Schaft 46 eines bolzenartigen Elements 18 aufnehmen kann.

Das Rastteil 20 ist durch den Spalt 26 mit dem Kopfteil 22 verbunden.

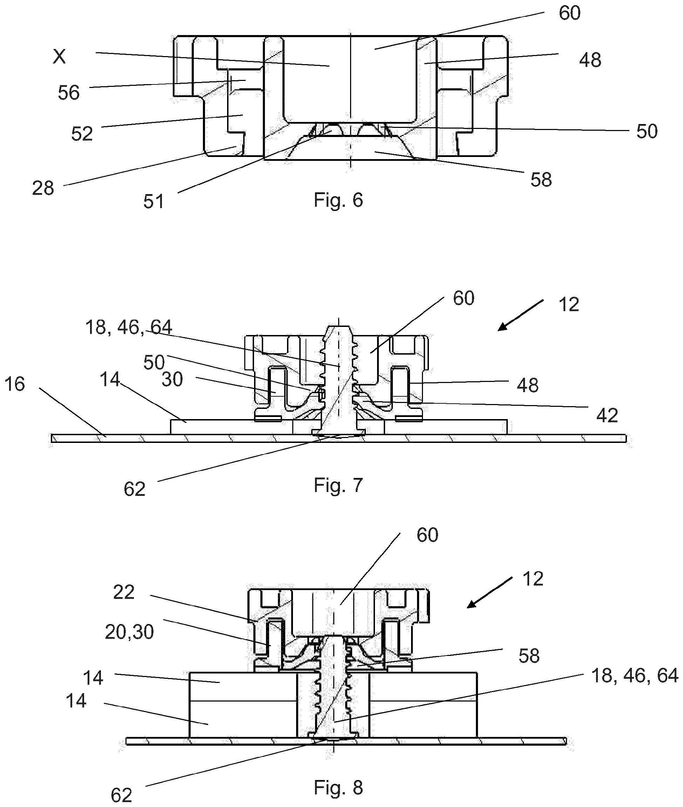

Das Kopfteil 22 ist über dem Rastteil 20 angeordnet, wie in Fig. 1, 2, 3, 7 und 8 dargestellt. Das Kopfteil 22 ist insbesondere in Fig. 5 und Fig. 6 dargestellt. Das Kopfteil 22 weist einen Grundkörper 48 und einen Abstützabschnitt 50 auf.

Der Grundkörper 48 ist beispielsweise hülsenförmig und erstreckt sich zwischen einem ersten Endabschnitt und einem zweiten Endabschnitt entlang der Längsachse X. Der Grundkörper 48 (bzw. der erste Endabschnitt) weist eine Nut 52 auf. Die Nut 52 nimmt teilweise die Hülse 30 des Rastteils auf. Beispielsweise erstreckt sich die zweite Endportion E2 der Hülse 30 in der Nut 52. Der zweite Endabschnitt kann eine Rille aufweisen.

Die Nut 52 umfasst eine innere Wand, eine äußere Wand und eine Querwand 56. Die innere Wand und die äußere Wand sind beispielsweise ziemlich parallel zueinander und zur Längsachse X. Die Querwand 56 verbindet die innere Wand und die äußere Wand. Die Querwand 56 bildet einen Verstärkungsabschnitt aus. Die Querwand liegt beispielsweise an drei Viertel der Höhe der inneren und äußeren Wand von dem ersten Endabschnitt.

Der Abstützabschnitt 50 ist mit der inneren Wand verbunden, und erstreckt sich insbesondere von einer inneren Oberfläche der inneren Wand. Der Abstützabschnitt 50 ist beispielsweise kreisförmig und auf der Längsachse X zentriert. Der Abstützabschnitt 50 kann einen Kranz oder eine Krone mit oder ohne Unterbrechungen 51 ausbilden. Der Abstützabschnitt 50 ist insbesondere in Fig. 5 und Fig. 6 sichtbar. Von oben ist der Abstützabschnitt 50 sternförmig. Der Abstützabschnitt 50 bildet einen innere offenen Deckel aus und liegt beispielsweise an weniger als die Hälfte der Höhe der inneren und äußeren Wand von dem ersten Endabschnitt.

Der Abstützabschnitt 50 deckt teilweise die von der inneren Wand ausgebildete Aufnahme ab. Im Wesentlichen teilt der Abstützabschnitt 50 die von der inneren Wand ausgebildete Aufnahme in zwei Teile 58, 60. Die zwei Teile 58, 60 können gleich sein, oder wie zum Beispiel in Fig. 6 dargestellt, kann der erste Teil 58 ein kleineres Volumen aufweisen als der zweite Teil 60. Der erste Teil 58 kann den Rastkörper 42 aufnehmen.

Das Kopfteil 22 liegt über dem Rastteil 20 wie in Fig. 3 oder Fig. 2 dargestellt. In Fig. 3 sind Kopfteil und Rastteil 20 in der Freiposition. Der erste Teil des Kopfteils 22 nimmt den Rastkörper 42 auf. Der Vorsprung 28 des Kopfteils 22 ist beispielsweise in dem ersten Abschnitt des Spalts 26. Wie in Fig. 3 dargestellt, kann das Kopfteil 22 zwei Vorsprünge und das Rastteil zwei Spalte haben, jeder Spalt wirkt mit einem Vorsprung zusammen. Die zwei Vorsprünge (bzw. die zwei Spalte) sind auf dem Kopfteil (bzw. auf dem Rastteil) diametral entgegengesetzt angeordnet. In der Freiposition ist der Abstützabschnitt entweder mit dem Rastkörper nicht oder nur ganz wenig in Kontakt, so dass er keine Kraft (bzw. unerhebliche Kräfte) auf den Rastkörper ausübt.

Das Kopfteil 22 ist einteilig. Das Rastteil 20 ist einteilig. Das Befestigungselement 12 mit dem Kopfteil 22 und dem Rastteil 20 ist zweiteilig. Das Kopfteil 22 und/oder das Rastteil 20 ist aus Kunststoffmaterial. Kopfteil 22 und Rastteil 20 können durch eine lösbare Verbindung oder eine unlösbare Verbindung verbunden sein. Beispielsweise kann am Anfang des ersten Abschnitts des Spalts 26 (in Richtung der zweiten Endportion) ein Anschlag angebracht sein. Der Vorsprung des Kopfteils 22 ist in der Freiposition in dem ersten Abschnitt des Spalts und kann aufgrund des Anschlags den ersten Abschnitt nicht verlassen.

Das Befestigungselement 12 mit dem Kopfteil 22 und dem Rastteil 20, beispielsweise das aus Fig. 3 dargestellte Befestigungselement, wird in der Anordnung 10 von Fig. 1, Fig. 7 oder Fig. 8 benutzt. Die Anordnung 10 umfasst das Befestigungselement 12, das erste Werkstück 14, das zweite Werkstück 16 und das bolzenartige Element 18.

Das bolzenartige Element 18 ist beispielsweise ein Schweißbolzen, welcher geeignet ist, unter Verwendung eines Schweißverfahrens mit dem zweiten Werkstück 16 verbunden zu werden. Das bolzenartige Element 18 weist beispielsweise einen Kopf 62 mit einer Schweißoberfläche und einer zu der Schweißoberfläche abgewandten Haltoberfläche und einen Gewindeschaft 64 auf.

In einer anderen Ausführungsform kann das bolzenartige Element einen Kopf 62 mit einer Schweißoberfläche und einer zu der Schweißoberfläche abgewandten Haltoberfläche und einen Schaft, ohne Gewinde aber mit einem Hinterschnitt.

Die Schweißoberfläche wird mit dem zweiten Werkstück verschweißt. Der Gewindeschaft 64 erstreckt sich im Wesentlichen orthogonal zum zweiten Werkstück 16.

Wie bereits in Fig. 7 und Fig. 8 dargestellt, wird der Gewindeschaft 64 (oder der Schaft mit dem Hinterschnitt) in ein auf dem ersten Werkstück angeordneten Loch eingelegt. Das erste Werkstück 14 kann verschiedene Dicken aufweisen. Das erste Werkstück 14 von Fig. 7 hat beispielsweise eine geringere Dicke als das erste Werkstück 14 von Fig. 8. Die Höhe (Dicke) der beiden Werkstücke kann beispielsweise zwischen 1 und 9 Millimeter (mm) sein. Das erste Werkstück kann mehrere Bleche oder Teile umfassen. Das erste und/oder zweite Werkstück kann abschnittweise flach sein.

Der Gewindeschaft 68 (oder der Schaft mit dem Hinterschnitt) ragt teilweise von dem ersten Werkstück vor. Das Befestigungselement 12 wird zuerst auf dem vorragenden Teil des Gewindeschafts (oder des Schafts mit dem Hinterschnitt) angeordnet. Die Gewindeschaftachse wird mit der Längsachse X ausgerichtet. Der Gewindeschaft 68 (oder der Schaft mit dem Hinterschnitt) wird in die durch die Hülse und den Rastkörper ausgebildete Aufnahme aufgenommen. Im Wesentlichen wird das Befestigungselement in Freiposition auf den Gewindeschaft (oder den Schaft mit dem Hinterschnitt) aufgedrückt, bis der Gewindeschaft 68 (oder der Schaft mit dem Hinterschnitt) in der Aufnahme aufgenommen wird. Der Rastkörper rastet dann über das Gewinde des Gewindeschafts 68 (oder des Schafts mit dem Hinterschnitt).

Das Befestigungselement 12 wird dann weitergedrückt, bis der Vorsprung zwischen dem ersten Abschnitt des Spaltes und dem zweiten Abschnitt des Spaltes ankommt. Dann wird eine Drehung des Befestigungselements ausgeübt, bis der Vorsprung in dem dritten Abschnitt des Spalts ankommt und gesperrt wird. Das Befestigungselement ist dann in der Absperrposition. In dieser Position blockiert der Abstütztabschnitt 50 den Rastkörpergegen eine Bewegung, und insbesondere gegen eine Bewegung entlang der Längsachse (bzw. nach oben, in Richtung der zweiten Endportion E2). Der Abstütztabschnitt 50 überdeckt den Rastkörper. Der Abstütztabschnitt 50 versperrt den Rastkörper 42, dieser rastet über die Gewindegänge des Gewindeschafts 64 (oder über den Hinterschnitt des Schafts mit dem Hinterschnitt). Um die Bewegung des Befestigungselements 12 zu vereinfachen, kann das Kopfteil einen Griffabschnitt 66 aufweisen, der bezüglich des Grundkörpers eine Querschnitterweiterung bereitstellt. Der Griffabschnitt 66 ist mit der äußeren Wand verbunden. Der Griffabschnitt 66 ist beispielsweise sternförmig. Der Griffabschnitt kann einen polygonalen Querschnitt aufweisen. Das Aufdrücken des Befestigungselements 12 kann von Hand oder mittels eines Werkzeugs erfolgen. Das Befestigungselement 12 kann beispielsweise durch ein Standardwerkzeug von der Absperrposition in die Freiposition gedreht werden. Beispielsweise weist die innere Wand des zweiten Endabschnitts einen Sechskantquerschnitt (oder einen anderen ähnlichen Querschnitt) auf, sodass und ein Steckschlüssel benutzt werden kann. Das Befestigungselement 12 ist wie einen Druckknopf ausgebildet. Das Befestigungselement 12 ist vorzugsweise lang genug entlang der Längsachse X, dass der Gewindeschaft 64 (oder der Schaft mit dem Hinterschnitt) von dem Befestigungselement 12 nicht oder nur wenig vorragt. Das gleiche Befestigungselement 12 kann an verschiedene (erste) Werkstückdicken angepasst sein, mit den gleichen Sperrkräften.

## Patentansprüche

1. Befestigungselement (12) mit:
- einem Rastteil (20), das eine Hülse und einen von der Hülse vorragenden Rastkörper (42) aufweist, wobei die Hülse sich entlang einer Längsachse erstreckt, wobei der Rastkörper in Richtung der Längsachse (X) vorragt, und wobei die Hülse und der Rastkörper eine Aufnahme ausbilden, in die ein Schaft eines bolzenartigen Elements aufnehmbar ist, und
- einem Kopfteil (22), das über dem Rastteil angeordnet ist, wobei das Kopfteil einen Grundkörper (48) und einen Abstützabschnitt aufweist,
wobei Kopfteil (22) und Rastteil (20) zwischen einer Freiposition und einer Absperrposition durch einen Bajonettverschluss (24) relativ zueinander beweglich sind, und wobei der Abstützabschnitt (50) in der Absperrposition den Rastkörper überdeckt und den Rastkörper gegen eine translatorische Bewegung entlang der Längsachse blockiert.

2. Befestigungselement (12) gemäß Anspruch 1, wobei das Kopfteil (22) einen Vorsprung aufweist, und wobei die Hülse (30) des Rastteils (20) einen Spalt aufweist, und wobei der Vorsprung und der Spalt den Bajonettverschluss ausbilden.

3. Befestigungselement (12) gemäß Anspruch 1 oder Anspruch 2, wobei der Grundkörper (48) eine Nut aufweist, die teilweise die Hülse (30) aufnimmt.

4. Befestigungselement (12) gemäß einem der vorhergehenden Ansprüche, wobei das Kopfteil (22) einen Griffabschnitt aufweist, der bezüglich des Grundkörpers eine Querschnitterweiterung bereitstellt.

5. Befestigungselement (12) gemäß einem der vorhergehenden Ansprüche, wobei der Abstützabschnitt (50) kreisförmig ist, und wobei der Abstützabschnitt (50) einen Kranz mit Unterbrechungen ausbildet.

6. Befestigungselement (12) gemäß einem der vorhergehenden Ansprüche, wobei die Hülse (30) sich entlang der Längsachse zwischen einer ersten Endportion und einer zweiten Endportion erstreckt, und wobei der Rastkörper (42) mit der ersten Endportion verbunden ist.

7. Befestigungselement (12) gemäß einem der vorhergehenden Ansprüche, wobei die Hülse (30) sich entlang der Längsachse zwischen einer ersten Endportion und einer zweiten Endportion erstreckt, wobei das Rastteil (20) einen Flansch aufweist, und wobei der Flansch mit der ersten Endportion verbunden ist und sich von der Hülse nach außen erstreckt.

8. Befestigungselement (12) gemäß Anspruch 7, wobei ein Gummiring und/oder eine Riffelung auf dem Flansch vorgesehen ist.

9. Anordnung (10) mit einem Befestigungselement (12) nach einem den Ansprüche 1 bis 8 und einem bolzenartigen Element (18) mit einem Gewindeschaft (64), wobei der Gewindeschaft in der Aufnahme aufgenommen ist, und wobei der Rastkörper mit den Gewindegänge des Gewindeschaftes rastet.

10. Anordnung (10) mit einem Befestigungselement (12) nach einem den Ansprüche 1 bis 8 und einem bolzenartigen Element (18) mit einem Schaft mit einem Hinterschnitt, wobei der Schaft mit Hinterschnitt in der Aufnahme aufgenommen ist, und wobei der Rastkörper (42) mit dem Hinterschnitt des Schaftes rastet.

11. Einbauverfahren eines Befestigungselements (12), das die Schritte umfasst:
- Bereitstellen eines Befestigungselements (12) gemäß einem der Ansprüche 1 bis 8, wobei Kopfteil und Rastteil in der Freiposition sind,
- Bereitstellen eines erstes Werkstücks mit einem Loch,
- Bereitstellen eines zweites Werkstücks mit einem verbundenen bolzenartigen Element (18) mit einem Gewindeschaft oder einem Schaft mit einem Hinterschnitt,
- Eindringen des Schaftes in das Loch,
- Anordnen des Befestigungselements auf dem Schaft,
- Aufdrücken des Befestigungselements auf den Schaft, so dass der Rastkörper (42) mit den Gewindegängen des Gewindeschaftes (64) oder mit dem Hinterschnitt des Schaftes einrastet,
- Weiterdrücken des Befestigungselements auf den Schaft, so dass das Kopfteil sich bewegt, um Kopfteil und Rastteil mithilfe des Bajonettverschlusses in die Absperrposition einzustellen.

## Claims

1. Fastening element (12) comprising:
- a locking part (20) having a sleeve and a locking body (42) projecting from the sleeve, the sleeve extending along a longitudinal axis, the locking body projecting in the direction of the longitudinal axis (X), and the sleeve and locking body forming a receptacle into which a shank of a bolt-like element can be received; and
- a head part (22) arranged above the locking part, the head part comprising a main body (48) and a support portion,
wherein head part (22) and locking part (20) are movable relative to each other between a free position and a locking position by means of a bayonet catch (24), and wherein the support portion (50) in the locking position covers the locking body and blocks the locking body against translational movement along the longitudinal axis.

2. Fastening element (12) according to claim 1, wherein the head part (22) has a projection, and wherein the sleeve (30) of the locking part (20) has a slot, and wherein the projection and the slot form the bayonet catch.

3. Fastening element (12) according to claim 1 or claim 2, wherein the main body (48) has a groove that partially receives the sleeve (30).

4. Fastening element (12) according to any one of the preceding claims, wherein the head part (22) has a grip portion that provides a cross-sectional extension with respect to the main body.

5. Fastening element (12) according to any one of the preceding claims, wherein the support portion (50) is circular, and wherein the support portion (50) forms a rim with interruptions.

6. Fastening element (12) according to any one of the preceding claims, wherein the sleeve (30) extends along the longitudinal axis between a first end portion and a second end portion, and wherein the locking body (42) is connected to the first end portion.

7. Fastening element (12) according to any one of the preceding claims, wherein the sleeve (30) extends along the longitudinal axis between a first end portion and a second end portion, wherein the locking part (20) has a flange, and wherein the flange is connected to the first end portion and extends outwardly from the sleeve.

8. Fastening element (12) according to claim 7, wherein a rubber ring and/or a corrugation is provided on the flange.

9. Arrangement (10) with a fastening element (12) according to any one of claims 1 to 8 and a bolt-like element (18) with a threaded shank (64), wherein the threaded shank is received in the receptacle, and wherein the locking body engages with the threads of the threaded shank.

10. Arrangement (10) with a fastening element (12) according to any one of claims 1 to 8 and a bolt-like element (18) with a shank with an undercut, wherein the shank with undercut is received in the receptacle, and wherein the locking body (42) engages with the undercut of the shank.

11. Method of installing a fastening element (12) that comprises the steps:
- providing a fastening element (12) according to any one of claims 1 to 8, wherein the head part and the locking part are in the free position,
- providing a first workpiece with a hole,
- providing a second workpiece with a connected bolt-like element (18) with a threaded shank or a shank with an undercut,
- penetrating the shank into the hole,
- arranging the fastening element on the shank,
- pressing the fastening element onto the shank so that the locking body (42) engages with the threads of the threaded shank (64) or with the undercut of the shank,
- pressing the fastening element further onto the shaft so that the head part moves to set the head part and latching part in the locking position with the aid of the bayonet catch.

## Revendications

1. Élément de fixation (12) avec :
- une partie d'encliquetage (20) qui présente une douille et un corps d'encliquetage (42) dépassant de la douille, dans lequel la douille s'étend le long d'un axe longitudinal, dans lequel le corps d'encliquetage dépasse en direction de l'axe longitudinal (X), et dans lequel la douille et le corps d'encliquetage réalisent un logement, dans lequel une tige d'un élément de type boulon peut être reçue, et
- une partie de tête (22) qui est agencée au-dessus de la partie d'encliquetage, dans lequel la partie de tête présente un corps de base (48) et une section d'appui,
dans lequel la partie de tête (22) et la partie d'encliquetage (20) sont mobiles l'une par rapport à l'autre entre une position libre et une position de blocage par une fermeture à baïonnette (24), et dans lequel la section d'appui (50) recouvre dans la position de blocage le corps d'encliquetage et bloque le corps d'encliquetage contre un mouvement de translation le long de l'axe longitudinal.

2. Élément de fixation (12) selon la revendication 1, dans lequel la partie de tête (22) présente une saillie, et dans lequel la douille (30) de la partie d'encliquetage (20) présente une fente, et dans lequel la saillie et la fente réalisent la fermeture à baïonnette.

3. Élément de fixation (12) selon la revendication 1 ou la revendication 2, dans lequel le corps de base (48) présente une rainure qui reçoit partiellement la douille (30).

4. Élément de fixation (12) selon l'une quelconque des revendications précédentes, dans lequel la partie de tête (22) présente une section de préhension qui fournit par rapport au corps de base un élargissement de section.

5. Élément de fixation (12) selon l'une quelconque des revendications précédentes, dans lequel la section d'appui (50) est circulaire, et dans lequel la section d'appui (50) réalise une couronne avec des interruptions.

6. Élément de fixation (12) selon l'une quelconque des revendications précédentes, dans lequel la douille (30) s'étend le long de l'axe longitudinal entre une première portion d'extrémité et une seconde portion d'extrémité, et dans lequel le corps d'encliquetage (42) est relié à la première portion d'extrémité.

7. Élément de fixation (12) selon l'une quelconque des revendications précédentes, dans lequel la douille (30) s'étend le long de l'axe longitudinal entre une première portion d'extrémité et une seconde portion d'extrémité, dans lequel la partie d'encliquetage (20) présente une bride, et dans lequel la bride est reliée à la première portion d'extrémité et s'étend de la douille vers l'extérieur.

8. Élément de fixation (12) selon la revendication 7, dans lequel un anneau en caoutchouc et/ou un cannelage est prévu sur la bride.

9. Agencement (10) avec un élément de fixation (12) selon l'une quelconque des revendications 1 à 8 et un élément (18) de type boulon avec une tige filetée (64), dans lequel la tige filetée est reçue dans le logement, et dans lequel le corps d'encliquetage s'encliquète avec les pas de filetage de la tige filetée.

10. Agencement (10) avec un élément de fixation (12) selon l'une quelconque des revendications 1 à 8 et un élément (18) de type boulon avec une tige avec une contre-dépouille, dans lequel la tige est reçue avec la contre-dépouille dans le logement, et dans lequel le corps d'encliquetage (42) s'encliquète avec la contre-dépouille de la tige.

11. Procédé de montage d'un élément de fixation (12) qui comprend les étapes :
- la fourniture d'un élément de fixation (12) selon l'une quelconque des revendications 1 à 8, dans lequel la partie de tête et la partie d'encliquetage sont dans la position libre,
- la fourniture d'une première pièce avec un trou,
- la fourniture d'une seconde pièce avec un élément (18) de type boulon relié avec une tige filetée ou une tige avec une contre-dépouille,
- la pénétration de la tige dans le trou,
- l'agencement de l'élément de fixation sur la tige,
- le pressage de l'élément de fixation sur la tige de sorte que le corps d'encliquetage (42) s'encliquète avec les pas de filetage de la tige filetée (64) ou avec la contre-dépouille de la tige,
- la suite du pressage de l'élément de fixation sur la tige de sorte que la partie de tête se déplace afin de régler la partie de tête et la partie d'encliquetage à l'aide de la fermeture à baïonnette dans la position de blocage.
